# EUROPEAN PATENT APPLICATION

(11) **EP 4 679 657 A1**
(43) Date of publication of application: **14.01.2026**
(21) Application number: 25185207.5
(22) Date of filing: 25.06.2025
(51) Int. Cl.: H02J 3/00, H02J 3/38, H02J 9/06

(54) **POWER GENERATION SYSTEM, INVERTER, AND ON-GRID/OFF-GRID SWITCHING METHOD FOR POWER GENERATION SYSTEM**

(30) Priority: 10.07.2024 CN 202410923999
(71) Applicant: Huawei Digital Power Technologies Co., Ltd., Shenzhen, Guangdong 518043 (CN)
(72) Inventor: CHEN, Kai, Shenzhen, 518043 (CN); FENG, Yupeng, Shenzhen, 518043 (CN); LI, Luo, Shenzhen, 518043 (CN)
(74) Representative: Epping - Hermann - Fischer

(57) **Abstract**

This application provides a power generation system (2), an inverter (20a), and an on-grid/off-grid switching method for a power generation system (2). In the power generation system (2), an inverter (20a) includes a direct current port (dc0) and a first alternating current port (ac0), and a backup power box (21) includes a second alternating current port (ac1), a first switch (K1), a second switch (K2), a third alternating current port (ac2), and a fourth alternating current port (ac3). The direct current port (dc0) is connected to a direct current power supply (3a), and the first alternating current port (ac0) is connected to a second alternating current port (ac1). The first switch (K1) and the second switch (K2) are connected in series between the second alternating current port (ac2) and the third alternating current port (ac2), and a series connection point between the first switch (K1) and the second switch (K2) is connected to the fourth alternating current port (ac3). The third alternating current port (ac2) is connected to a power grid (10), and the fourth alternating current port (ac3) is connected to a load (41). When a voltage at the third alternating current port (ac2) is greater than a first voltage threshold, the backup power box () controls both the first switch (K1) and the second switch (K2) to be turned on. When the voltage at the third alternating current port (ac2) is less than or equal to the first voltage threshold, the backup power box () controls the second switch (K2) to be turned off and keeps the first switch on (K1). In this way, the inverter (20a) truly switches between an on-grid operating mode and an off-grid operating mode seamlessly.

## Description

### TECHNICAL FIELD

This application relates to the field of photovoltaic energy storage technologies, and in particular, to a power generation system, an inverter, and an on-grid/off-grid switching method for a power generation system.

### BACKGROUND

In a photovoltaic energy storage and power generation system, to meet a requirement for an inverter to seamlessly switch between an on-grid operating mode and an off-grid operating mode, when a power grid experiences a power outage, a controller in the inverter usually stops outputting a pulse width modulation (pulse width modulation, PWM) signal (that is, stops sending a PWM driver gating signal) to a switching transistor in an inverter circuit for a period of time, and in the process of stopping sending the PWM driver gating signal for the period of time, the controller switches the inverter circuit from the on-grid operating mode to the off-grid operating mode to supply power to a load. However, during switching from the on-grid operating mode to the off-grid operating mode, the process of stopping sending the PWM driver gating signal for the period of time (for example, 5 ms to 20 ms) exists. Therefore, the on-grid/off-grid inverter cannot truly switch between the on-grid operating mode and the off-grid operating mode seamlessly. Consequently, uninterrupted power supply to the load cannot be ensured, and power supply reliability of the on-grid/off-grid inverter is poor.

### SUMMARY

This application provides a power generation system, an inverter, and an on-grid/off-grid switching method for a power generation system, so that an inverter may be switched from an on-grid operating mode to an off-grid operating mode without stopping sending a PWM driver gating signal. In this way, the inverter truly switches between the on-grid operating mode and the off-grid operating mode seamlessly, so that uninterrupted power supply to a load is ensured, thereby improving power supply reliability of the load.

According to a first aspect, an embodiment of this application provides a power generation system, and the power generation system includes an inverter and a backup power box. The inverter includes a direct current port and a first alternating current port, and the direct current port of the inverter is configured to connect to a direct current power supply. The inverter is configured to perform alternating current-direct current conversion between the direct current power supply and the backup power box. In specific implementation, the inverter is configured to: invert a direct current output by the direct current power supply to an alternating current, and supply power to a power grid and a load through the backup power box, or obtain power from the power grid through the backup power box, convert an alternating current provided by the power grid to a direct current, and charge the direct current power supply. The backup power box includes a second alternating current port, a first switch, a second switch, a third alternating current port, and a fourth alternating current port. The first switch and the second switch are connected in series between the second alternating current port and the third alternating current port of the backup power box, and a series connection point between the first switch and the second switch is connected to the fourth alternating current port of the backup power box. The second alternating current port of the backup power box is connected to the first alternating current port of the inverter, the third alternating current port of the backup power box is configured to connect to a power grid, and the fourth alternating current port of the backup power box is configured to connect to a load. When the inverter switches between an on-grid operating mode and an off-grid operating mode, the backup power box is configured to: when a voltage at the third alternating current port is greater than a first voltage threshold, control both the first switch and the second switch to be turned on, to cause the inverter or the power grid to supply power to the load. In this case, the inverter is in the on-grid operating mode. The voltage at the third alternating current port is a voltage of the power grid. After the power grid experiences a power outage or islanding occurs, the backup power box is further configured to: when the voltage at the third alternating current port is less than or equal to the first voltage threshold, control the second switch to be turned off and keep the first switch on, to disconnect the backup power box from the power grid and cause the inverter to supply power to the load. In this case, the inverter switches from the on-grid operating mode to the off-grid operating mode. According to this embodiment of this application, an operating mode of the inverter may be switched from the on-grid operating mode to the off-grid operating mode without stopping sending a PWM driver gating signal. In this way, the inverter truly switches between the on-grid operating mode and the off-grid operating mode seamlessly, thereby reducing duration of on-grid/off-grid switching of the inverter. In addition, uninterrupted power supply to the load is ensured, thereby improving power supply reliability of the load.

In a possible implementation, after the power grid experiences a power outage or islanding occurs, a voltage at the first alternating current port and the voltage at the third alternating current port gradually increase to be greater than or equal to a second voltage threshold. The second voltage threshold is greater than the first voltage threshold. In this case, the inverter is further configured to: when the voltage at the third alternating current port is greater than or equal to the second voltage threshold, operate in an open-loop voltage source mode, to decrease the voltage at the third alternating current port to be less than or equal to the first voltage threshold. The open-loop voltage source mode is an operating mode in which the inverter controls the voltage at the first alternating current port to be a fixed voltage, and the fixed voltage is less than or equal to the first voltage threshold. It should be understood that, after the power grid experiences a power outage or islanding occurs, the inverter does not stop sending a PWM driver gating signal, but controls the voltage at the first alternating current port to gradually decrease to be less than or equal to the first voltage threshold, and in a process in which the voltage at the first alternating current port gradually decreases, output of the inverter is continuous and uninterrupted. In this case, because the voltage at the first alternating current port is consistent with the voltage at the third alternating current port, the voltage at the third alternating current port also gradually decreases to be less than or equal to the first voltage threshold, so that the backup power box identifies that the power grid experiences a power outage or islanding occurs, and switches the inverter from the on-grid operating mode to the off-grid operating mode. According to this embodiment of this application, continuous and uninterrupted output of the inverter can be ensured after the power grid experiences a power outage or islanding occurs. In this way, the inverter truly switches between the on-grid operating mode and the off-grid operating mode seamlessly, so that the load is more reliably protected from being damaged, thereby improving product competitiveness of the inverter. In addition, the inverter operates in the open-loop voltage source mode, so that a risk such as an overcurrent or loss of control caused by current backflow to the inverter after the power grid experiences a power outage or islanding occurs can be avoided, to avoid a hardware fault risk caused by the overcurrent or loss of control of the inverter. This improves use safety and a service life of the inverter.

In a possible implementation, because the voltage at the first alternating current port is consistent with the voltage at the third alternating current port, the inverter is configured to detect the voltage at the first alternating current port, to obtain the voltage at the third alternating current port, so that whether the power grid experiences a power outage or islanding occurs is identified based on the voltage at the third alternating current port.

In a possible implementation, the backup power box is further configured to: after the second switch is turned off and the first switch is kept on, deliver a mode switching signal to the inverter. For example, the mode switching signal may be a low-level signal. The inverter is further configured to: receive the mode switching signal, and switch from the open-loop voltage source mode to a closed-loop voltage source mode. The closed-loop voltage source mode is an operating mode in which the inverter adjusts the voltage at the first alternating current port in real time based on a voltage of the load. After the inverter switches to the closed-loop voltage source mode, the voltage at the first alternating current port gradually increases to be greater than the first voltage threshold and less than the second voltage threshold. In this case, because the voltage at the first alternating current port is consistent with a voltage at the fourth alternating current port, the voltage at the fourth alternating current port also gradually increases to be greater than the first voltage threshold and less than the second voltage threshold, and power is supplied to the load. According to this embodiment of this application, after the inverter switches to the off-grid operating mode, the inverter may flexibly adjust the voltage at the first alternating current port based on power of the load, and supply power to the load, to ensure good running of the load. This improves power supply efficiency of the inverter.

In a possible implementation, the first voltage threshold is k times a rated voltage of the power grid, and k is less than 1.

In a possible implementation, the second voltage threshold is m times the rated voltage of the power grid, and m is greater than 1.

According to a second aspect, an embodiment of this application provides an inverter, and the inverter is configured to be connected between a direct current power supply and a power grid or between the direct current power supply and a load to perform alternating current-direct current conversion. In specific implementation, the inverter is configured to: invert a direct current output by the direct current power supply to an alternating current, and supply power to the power grid and the load, or convert an alternating current provided by the power grid to a direct current, and charge the direct current power supply. The inverter includes a direct current port, an inverter circuit, a first switch, a second switch, a first alternating current port, and a second alternating current port. The direct current port of the inverter is configured to connect to the direct current power supply, the first alternating current port of the inverter is configured to connect to the power grid, and the second alternating current port of the inverter is configured to connect to the load. A direct current terminal of the inverter circuit is connected to the direct current port of the inverter, the first switch and the second switch are connected in series between an alternating current terminal of the inverter circuit and the first alternating current port of the inverter, and a series connection point between the first switch and the second switch is connected to the second alternating current port of the inverter. When the inverter switches between an on-grid operating mode and an off-grid operating mode, the inverter is configured to: when a voltage at the first alternating current port is greater than a first voltage threshold, control both the first switch and the second switch to be turned on, to cause the inverter circuit or the power grid to supply power to the load. In this case, the inverter is in the on-grid operating mode. The voltage at the first alternating current port is a voltage of the power grid. After the power grid experiences a power outage or islanding occurs, the voltage at the first alternating current port gradually increases to be greater than or equal to a second voltage threshold, and the second voltage threshold is greater than the first voltage threshold. In this case, the inverter is further configured to: when the voltage at the first alternating current port is greater than or equal to the second voltage threshold, control the second switch to be turned off and keep the first switch on, to disconnect the inverter circuit from the power grid and cause the inverter circuit to supply power to the load. In this case, the inverter switches from the on-grid operating mode to the off-grid operating mode. According to this embodiment of this application, the inverter may be switched from the on-grid operating mode to the off-grid operating mode without stopping sending a PWM driver gating signal. In this way, the inverter truly switches between the on-grid operating mode and the off-grid operating mode seamlessly, thereby reducing duration of on-grid/off-grid switching of the inverter. In addition, uninterrupted power supply to the load is ensured, thereby improving power supply reliability of the load.

In a possible implementation, after the power grid experiences a power outage or islanding occurs, the inverter is further configured to: when the voltage at the first alternating current port is greater than or equal to the second voltage threshold, control the inverter circuit to operate in an open-loop voltage source mode. The open-loop voltage source mode is an operating mode in which the inverter controls a voltage at the alternating current terminal of the inverter circuit to be a fixed voltage. Further, the inverter is further configured to: after the inverter circuit operates in the open-loop voltage source mode, control the second switch to be turned off and keep the first switch on, to disconnect the inverter circuit from the power grid and cause the inverter circuit to supply power to the load. In this case, the inverter switches from the on-grid operating mode to the off-grid operating mode. According to this embodiment of this application, after the power grid experiences a power outage or islanding occurs, the inverter circuit is controlled to operate in the open-loop voltage source mode, so that a risk such as an overcurrent or loss of control caused by current backflow to the inverter after the power grid experiences a power outage or islanding occurs can be avoided, to avoid a hardware fault risk caused by the overcurrent or loss of control of the inverter. This improves use safety and a service life of the inverter. In addition, the inverter circuit is controlled to operate in the open-loop voltage source mode to ensure continuous and uninterrupted output of the inverter. In this way, the inverter truly switches between the on-grid operating mode and the off-grid operating mode seamlessly, so that the load is more reliably protected from being damaged, thereby improving product competitiveness of the inverter.

In a possible implementation, the inverter is further configured to: after the second switch is turned off and the first switch is kept on, control the inverter circuit to switch from the open-loop voltage source mode to a closed-loop voltage source mode. The closed-loop voltage source mode is an operating mode in which the inverter adjusts a voltage at the alternating current terminal of the inverter circuit in real time based on a voltage of the load. After the inverter circuit switches to the closed-loop voltage source mode, the voltage at the alternating current terminal of the inverter circuit gradually decreases to be less than the second voltage threshold and greater than the first voltage threshold. In this case, because the voltage at the alternating current terminal of the inverter circuit is consistent with a voltage at the second alternating current port, the voltage at the second alternating current port also gradually decreases to be less than the second voltage threshold and greater than the first voltage threshold, and power is supplied to the load. According to this embodiment of this application, after the inverter switches to the off-grid operating mode, the inverter may flexibly adjust the voltage at the alternating current terminal of the inverter circuit based on power of the load, and supply power to the load, to ensure good running of the load. This improves power supply efficiency of the inverter.

In a possible implementation, the first voltage threshold is k times a rated voltage of the power grid, and k is less than 1.

In a possible implementation, the second voltage threshold is m times the rated voltage of the power grid, and m is greater than 1.

According to a third aspect, an embodiment of this application provides an on-grid/off-grid switching method for a power generation system, and the method may be performed by a controller in the power generation system. In the method, when a voltage of a power grid is greater than a first voltage threshold, the controller controls both a first switch and a second switch to be turned on, to cause an inverter or the power grid to supply power to a load. In this case, the inverter is in an on-grid operating mode. The power generation system includes the inverter, the first switch, and the second switch. The inverter includes a direct current port and a first alternating current port. The direct current port of the inverter is configured to connect to a direct current power supply. The first switch and the second switch are configured to connect in series between the first alternating current port of the inverter and the power grid. A series connection point between the first switch and the second switch is configured to connect to the load. When the voltage of the power grid is less than or equal to the first voltage threshold, the controller may further control the second switch to be turned off and keep the first switch on, to disconnect the inverter from the power grid and cause the inverter to supply power to the load. In this case, the inverter switches from the on-grid operating mode to an off-grid operating mode. According to this embodiment of this application, the inverter may be switched from the on-grid operating mode to the off-grid operating mode without stopping sending a PWM driver gating signal. In this way, the inverter truly switches between the on-grid operating mode and the off-grid operating mode seamlessly, thereby reducing duration of on-grid/off-grid switching of the inverter. In addition, uninterrupted power supply to the load is ensured, thereby improving power supply reliability of the load.

In a possible implementation, after the power grid experiences a power outage or islanding occurs, the voltage of the power grid gradually increases to be greater than or equal to a second voltage threshold, and the second voltage threshold is greater than the first voltage threshold. In this case, when the voltage of the power grid is greater than or equal to the second voltage threshold, the controller operates in an open-loop voltage source mode by using the inverter, to decrease the voltage of the power grid to be less than or equal to the first voltage threshold. It should be understood that, after the power grid experiences a power outage or islanding occurs, the inverter does not stop sending a PWM driver gating signal, but controls a voltage at the first alternating current port to gradually decrease to be less than or equal to the first voltage threshold, and in a process in which the voltage at the first alternating current port gradually decreases, output of the inverter is continuous and uninterrupted. In this case, because the voltage at the first alternating current port is consistent with the voltage of the power grid, the voltage of the power grid also gradually decreases to be less than or equal to the first voltage threshold, so that the controller identifies that the power grid experiences a power outage or islanding occurs, and switches the inverter from the on-grid operating mode to the off-grid operating mode. According to this embodiment of this application, continuous and uninterrupted output of the inverter can be ensured after the power grid experiences a power outage or islanding occurs, and the inverter is switched from the on-grid operating mode to the off-grid operating mode when the output of the inverter is continuous and uninterrupted. In this way, the inverter truly switches between the on-grid operating mode and the off-grid operating mode seamlessly, so that the load is more reliably protected from being damaged, thereby improving product competitiveness of the inverter. In addition, the inverter operates in the open-loop voltage source mode, so that a risk such as an overcurrent or loss of control caused by current backflow to the inverter after the power grid experiences a power outage or islanding occurs can be avoided, to avoid a hardware fault risk caused by the overcurrent or loss of control of the inverter. This improves use safety and a service life of the inverter.

In a possible implementation, because the voltage at the first alternating current port is consistent with the voltage of the power grid, the controller may detect the voltage at the first alternating current port by using the inverter, to obtain the voltage of the power grid, so that whether the power grid experiences a power outage or islanding occurs is identified based on the voltage of the power grid.

In a possible implementation, after the second switch is turned off and the first switch is kept on, the controller delivers a mode switching signal to the inverter. The mode switching signal may usually be a low-level signal. The controller may receive the mode switching signal by using the inverter, and switch from the open-loop voltage source mode to a closed-loop voltage source mode by using the inverter. After the inverter switches to the closed-loop voltage source mode, the voltage at the first alternating current port gradually increases to be greater than the first voltage threshold and less than the second voltage threshold, and power is supplied to the load through the first switch. According to this embodiment of this application, after the inverter switches to the off-grid operating mode, the inverter may flexibly adjust the voltage at the first alternating current port based on power of the load, and supply power to the load, to ensure good running of the load. This improves power supply efficiency of the inverter.

It should be understood that mutual reference may be made to the implementations and beneficial effect of the foregoing aspects of this application.

### BRIEF DESCRIPTION OF DRAWINGS

FIG. 1 is a diagram of a structure of a power generation system according to an embodiment of this application;
FIG. 2 is a diagram of a circuit architecture of a power generation system according to an embodiment of this application;
FIG. 3A is a diagram of another circuit architecture of a power generation system according to an embodiment of this application;
FIG. 3B is a diagram of another circuit architecture of a power generation system according to an embodiment of this application;
FIG. 4 is a diagram of another circuit architecture of a power generation system according to an embodiment of this application;
FIG. 5 is a diagram of another circuit architecture of a power generation system according to an embodiment of this application;
FIG. 6 is a diagram of a circuit architecture of an inverter according to an embodiment of this application;
FIG. 7A is a diagram of another circuit architecture of an inverter according to an embodiment of this application;
FIG. 7B is a diagram of another circuit architecture of an inverter according to an embodiment of this application; and
FIG. 8 is a schematic flowchart of an on-grid/off-grid switching method for a power generation system according to an embodiment of this application.

### DESCRIPTION OF EMBODIMENTS

The power generation system provided in this application is applicable to a plurality of application fields such as the new energy intelligent microgrid field, the power transmission and distribution field, the new energy field, the photovoltaic power generation field, the photovoltaic energy storage and power generation field, and the high-power converter field. This may be specifically determined based on an actual application scenario, and is not limited herein. The power generation system provided in this application may adapt to different application scenarios, for example, a photovoltaic power supply application scenario, a photovoltaic storage and power supply application scenario, or another application scenario. The following uses a photovoltaic power supply application scenario as an example for description. Details are not described below again.

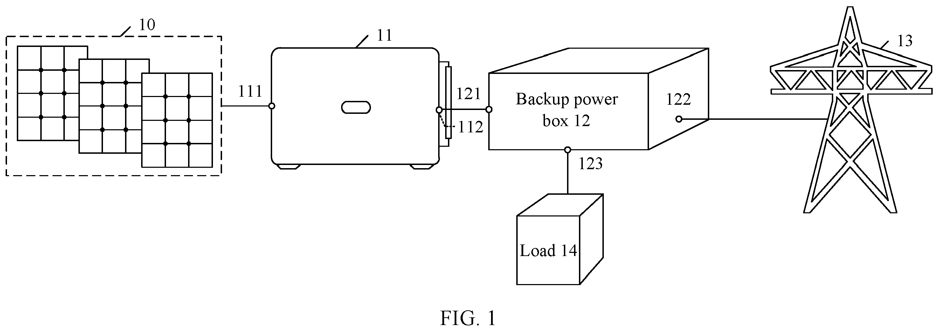

FIG. 1 is a diagram of a structure of a power generation system according to an embodiment of this application. When the power generation system is used in a photovoltaic power supply application scenario, a direct current power supply may be a photovoltaic module. A structure of the power generation system may be shown in FIG. 1. The power generation system includes an inverter 11 and a backup power box 12. The inverter 11 includes a direct current port 111 and a first alternating current port 112. The backup power box 12 includes a second alternating current port 121, a third alternating current port 122, and a fourth alternating current port 123. The direct current port 111 of the inverter 11 is configured to connect to the photovoltaic module 10, the first alternating current port 112 of the inverter 11 is connected to the second alternating current port 121 of the backup power box 12, the third alternating current port 122 of the backup power box 12 is configured to connect to a power grid 13, and the fourth alternating current port 123 of the backup power box 12 is configured to connect to a load 14. It should be understood that there may be one or more photovoltaic modules 10. This is not specifically limited herein.

The photovoltaic module 10 is configured to: absorb solar energy, convert the solar energy into electric energy, and output a direct current to the inverter 11. The inverter 11 is configured to: perform alternating current-direct current conversion on the direct current output by the photovoltaic module 10 and output an alternating current. In this case, the direct current port 111 of the inverter 11 is an input port, and the first alternating current port 112 of the inverter 11 is an output port.

The backup power box 12 is configured to switch the inverter 11 between an on-grid operating mode and an off-grid operating mode. The backup power box 12 is configured to switch the inverter 11 to the on-grid operating mode. In this case, the inverter 11 is configured to output the alternating current to the power grid 13 and the load 14 through the backup power box 12, or the power grid 13 outputs an alternating current to the load 14. It should be understood that, when the inverter 11 is configured to output the alternating current to the power grid 13 and the load 14, the second alternating current port 121 is an input port, and both the third alternating current port 122 and the fourth alternating current port 123 are output ports. When the power grid 13 outputs the alternating current to the load 14, the third alternating current port 122 is an input port, and the fourth alternating current port 123 is an output port. When the power grid 13 experiences a power outage or islanding occurs, the backup power box 12 is further configured to switch the inverter 11 from the on-grid operating mode to the off-grid operating mode. In this case, the inverter 11 is configured to output the alternating current to the load 14. Islanding is effect that the power generation system still keeps supplying power to a part of an adjacent line in the power grid 13 when the power grid 13 suddenly loses voltage.

When the power generation system is used in a photovoltaic storage and power supply application scenario, the direct current power supply includes the photovoltaic module 10 and an energy storage unit (not shown in the figure), and the energy storage unit is connected to the direct current port 111 of the inverter 11. The inverter 11 is configured to perform alternating current-direct current conversion on a direct current output by the energy storage unit and output an alternating current. In this case, the direct current port 111 of the inverter 11 is an input port, and the first alternating current port 112 of the inverter 11 is an output port. The inverter 11 is further configured to: obtain power from the power grid 13 through the backup power box 12, convert an alternating current provided by the power grid 13 into a direct current, and charge the energy storage unit. In this case, both the direct current port 111 of the inverter 11 and the second alternating current port 121 of the backup power box 12 are output ports, and both the first alternating current port 112 of the inverter 11 and the third alternating current port 122 of the backup power box 12 are input ports.

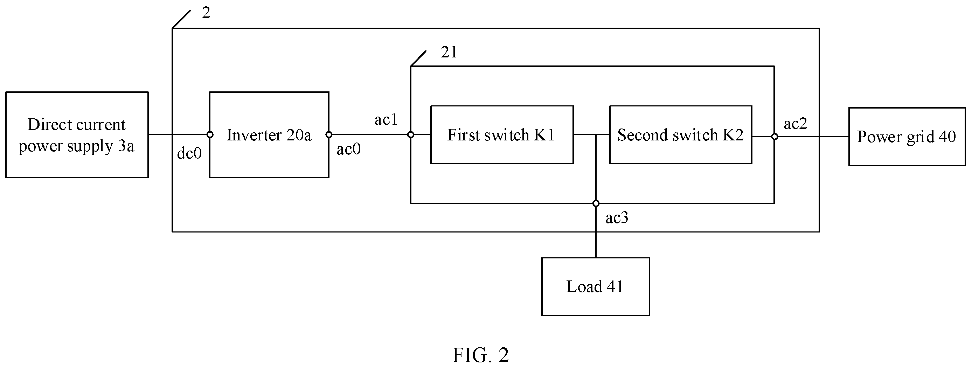

The following describes, with reference to FIG. 2 to FIG. 7B, circuit architectures and operating principles of the power generation system and the inverter provided in embodiments of this application.

FIG. 2 is a diagram of a circuit architecture of a power generation system according to an embodiment of this application. There may be one inverter in the foregoing power generation system. In this case, a circuit architecture of the power generation system may be shown in FIG. 2. The power generation system 2 includes an inverter 20a and a backup power box 21. The inverter 20a includes a direct current port dc0 and a first alternating current port ac0, and the direct current port dc0 of the inverter 20a is configured to connect to a direct current power supply 3a. The inverter 20a is configured to perform alternating current-direct current conversion between the direct current power supply 3a and a backup power box 21. For a specific process, refer to the embodiment corresponding to FIG. 1, and details are not described herein again. The backup power box 21 includes a second alternating current port ac1, a first switch K1, a second switch K2, a third alternating current port ac2, and a fourth alternating current port ac3. The first switch K1 and the second switch K2 are connected in series between the second alternating current port ac1 and the third alternating current port ac2 of the backup power box 21, and a series connection point between the first switch K1 and the second switch K2 is connected to the fourth alternating current port ac3 of the backup power box 21. The second alternating current port ac1 of the backup power box 21 is connected to the first alternating current port ac0 of the inverter 20a, the third alternating current port ac2 of the backup power box 21 is configured to connect to a power grid 40, and the fourth alternating current port ac3 of the backup power box 21 is configured to connect to a load 41. When the inverter 20a switches between an on-grid operating mode and an off-grid operating mode, the backup power box 21 is configured to: when a voltage at the third alternating current port ac2 is greater than a first voltage threshold, control both the first switch K1 and the second switch K2 to be turned on, to cause the inverter 20a or the power grid 40 to supply power to the load 41. In this case, the inverter 20a is in the on-grid operating mode. The voltage at the third alternating current port ac2 is the same as a voltage of the power grid 40. After the power grid 40 experiences a power outage or islanding occurs, the backup power box 21 is further configured to: when the voltage at the third alternating current port ac2 is less than or equal to the first voltage threshold, control the second switch K2 to be turned off and keep the first switch K1 on, to disconnect the backup power box 21 from the power grid 40 and cause the inverter 20a to supply power to the load 41. In this case, the inverter 20a switches from the on-grid operating mode to the off-grid operating mode.

According to this embodiment of this application, the inverter 20a may be switched from the on-grid operating mode to the off-grid operating mode without stopping sending a PWM driver gating signal. In this way, the inverter 20a truly switches between the on-grid operating mode and the off-grid operating mode seamlessly, thereby reducing duration of on-grid/off-grid switching of the inverter 20a. In addition, uninterrupted power supply to the load 41 is ensured, thereby improving power supply reliability of the load 41.

The first switch K1 and the second switch K2 may be relays, controllable switches, or switches of another type that have a load breaking capability, and there may be one or more first switches K1 and one or more second switches K2. The load breaking capability means that both the first switch K1 and the second switch K2 have a capability of breaking a circuit with a current and voltage.

Power of the load 41 is greater than output power of the inverter 20a (that is, heavy load), or the power of the load 41 is less than or equal to the output power of the inverter 20a (that is, light load). This is not limited herein. It should be understood that, whether the load 41 is light or heavy, the inverter 20a can truly switch between the on-grid operating mode and the off-grid operating mode seamlessly in this embodiment of this application, resulting in greater applicability.

When the inverter 20a switches between the on-grid operating mode and the off-grid operating mode, the backup power box 21 is further configured to: detect the voltage at the third alternating current port ac2, and when the voltage at the third alternating current port ac2 is greater than the first voltage threshold, control both the first switch K1 and the second switch K2 to be turned on, to cause the inverter 20a or the power grid 40 to supply power to the load 41. A voltage at the first alternating current port ac0 is greater than the first voltage threshold when the inverter 20a supplies power to the load 41. The first voltage threshold is k times a rated voltage of the power grid 40, and k is less than 1. For example, k is 0.7, 0.8, or another value. It should be understood that, after both the first switch K1 and the second switch K2 are turned on, the voltage at the first alternating current port ac0 and the voltage at the third alternating current port ac2 are kept the same as each other, for example, are equal to the rated voltage of the power grid 40.

After the power grid 40 experiences the power outage or islanding occurs, the voltage at the first alternating current port ac0 and the voltage at the third alternating current port ac2 gradually increase to be greater than or equal to a second voltage threshold, where the second voltage threshold is greater than the first voltage threshold. The second voltage threshold is m times the rated voltage of the power grid 40, and m is greater than 1. For example, m may be 1.15 or another value. The inverter 20a is further configured to detect the voltage at the first alternating current port ac0 to obtain the voltage at the third alternating current port ac2. Further, the inverter 20a is further configured to: when the voltage at the third alternating current port ac2 is greater than or equal to the second voltage threshold, operate in an open-loop voltage source mode, to decrease the voltage at the third alternating current port ac2 to be less than or equal to the first voltage threshold. The open-loop voltage source mode is an operating mode in which the inverter 20a controls the voltage at the first alternating current port ac0 to be a fixed voltage, and the fixed voltage is less than or equal to the first voltage threshold. For example, the open-loop voltage source mode may be a voltage source droop control mode, a voltage source virtual synchronous generator (virtual synchronous generator, VSG) mode, or another voltage source mode. This is not limited herein. It should be understood that, after the power grid 40 experiences a power outage or islanding occurs, the inverter 20a does not stop sending a PWM driver gating signal, but controls the voltage at the first alternating current port ac0 to gradually decrease to be less than or equal to the first voltage threshold, and in a process in which the voltage at the first alternating current port ac0 gradually decreases, output of the inverter 20a is continuous and uninterrupted. Because the voltage at the first alternating current port ac0 is consistent with the voltage at the third alternating current port ac2, the voltage at the third alternating current port ac2 also gradually decreases to be less than or equal to the first voltage threshold, so that the backup power box 21 identifies that the power grid 40 experiences a power outage or islanding occurs, and switches the inverter 20a from the on-grid operating mode to the off-grid operating mode.

According to this embodiment of this application, continuous and uninterrupted output of the inverter 20a can be ensured after the power grid 40 experiences a power outage or islanding occurs, so that the inverter 20a is prevented from stopping sending a PWM driver gating signal for a period of time and being switched to the off-grid operating mode in a process in which the inverter 20a stops sending the PWM driver gating signal. In this way, the inverter 20a truly switches between the on-grid operating mode and the off-grid operating mode seamlessly, so that the load 41 is more reliably protected from being damaged, thereby improving product competitiveness of the inverter 20a. In addition, the inverter 20a operates in the open-loop voltage source mode, so that a risk such as an overcurrent or loss of control caused by current backflow to the inverter 20a after the power grid 40 experiences a power outage or islanding occurs can be avoided, to avoid a hardware fault risk caused by the overcurrent or loss of control of the inverter 20a. This improves use safety and a service life of the inverter 20a.

An example in which the open-loop voltage source mode is a voltage source droop control mode is used for description. The inverter 20a is configured to: collect the voltage at the first alternating current port ac0, and adjust the voltage at the first alternating current port ac0 by using a proportional-integral (proportional-integral, PI) controller based on a difference between the voltage at the first alternating current port ac0 and the fixed voltage, so that the voltage at the first alternating current port ac0 is kept consistent with the fixed voltage, and gradually decreases to be less than or equal to the first voltage threshold. For example, the fixed voltage may be 0.7 times the rated voltage of the power grid 40.

After the inverter 20a switches to the off-grid operating mode, the backup power box 21 is further configured to: after the second switch K2 is turned off and the first switch K1 is kept on, deliver a mode switching signal to the inverter 20a. The mode switching signal indicates the inverter 20a to switch from the open-loop voltage source mode to a closed-loop voltage source mode. For example, the mode switching signal may be a low-level signal. The inverter 20a is further configured to: receive the mode switching signal, and switch from the open-loop voltage source mode to the closed-loop voltage source mode. The closed-loop voltage source mode is an operating mode in which the inverter 20a adjusts the voltage at the first alternating current port ac0 in real time based on a voltage of the load 41. For example, the closed-loop voltage source mode may be the voltage source droop control mode, the VSG mode, or another voltage source mode. This is not limited herein. After the inverter 20a switches to the closed-loop voltage source mode, the voltage at the first alternating current port ac0 gradually increases to be greater than the first voltage threshold and less than the second voltage threshold. In this case, because the voltage at the first alternating current port ac0 is consistent with a voltage at the fourth alternating current port ac3, the voltage at the fourth alternating current port ac3 also gradually increases to be greater than the first voltage threshold and less than the second voltage threshold, and power is supplied to the load 41. According to this embodiment of this application, after the inverter 20a switches to the off-grid operating mode, the inverter 20a may flexibly adjust the voltage at the first alternating current port ac0 based on the power of the load 41 and supply power to the load 41, to ensure good running of the load 41. This improves power supply efficiency of the inverter 20a.

An example in which the closed-loop voltage source mode is the voltage source droop control mode is used for description. The backup power box 21 is further configured to: detect the voltage at the fourth alternating current port ac3 (namely, the voltage of the load 41) in real time, and output the voltage of the load 41 to the inverter 20a. In this case, the inverter 20a is configured to adjust the voltage at the first alternating current port ac0 based on a difference between the voltage of the load 41 and a reference voltage by using the PI controller, so that the voltage at the first alternating current port ac0 is kept consistent with the reference voltage. In this way, the voltage at the first alternating current port ac0 gradually increases to be greater than the first voltage threshold and less than the second voltage threshold. For example, the reference voltage may be the rated voltage of the power grid 40.

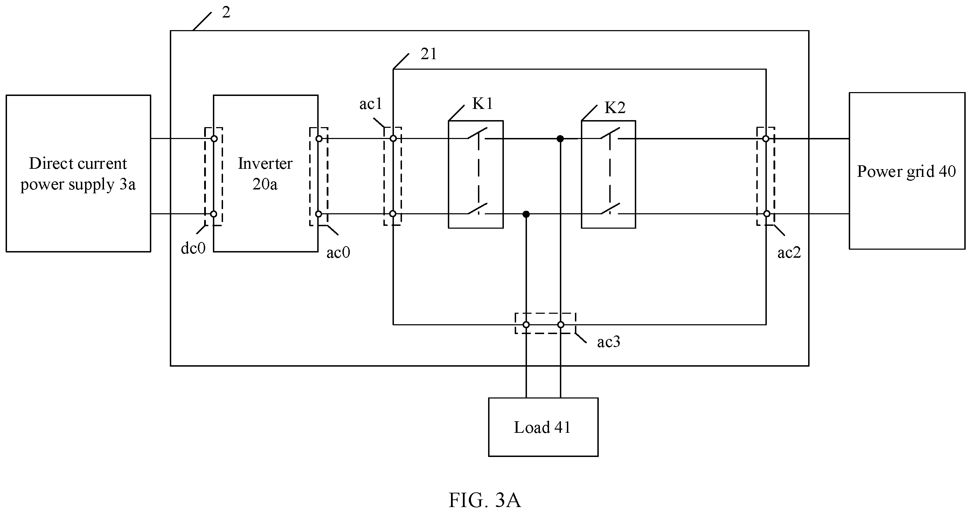

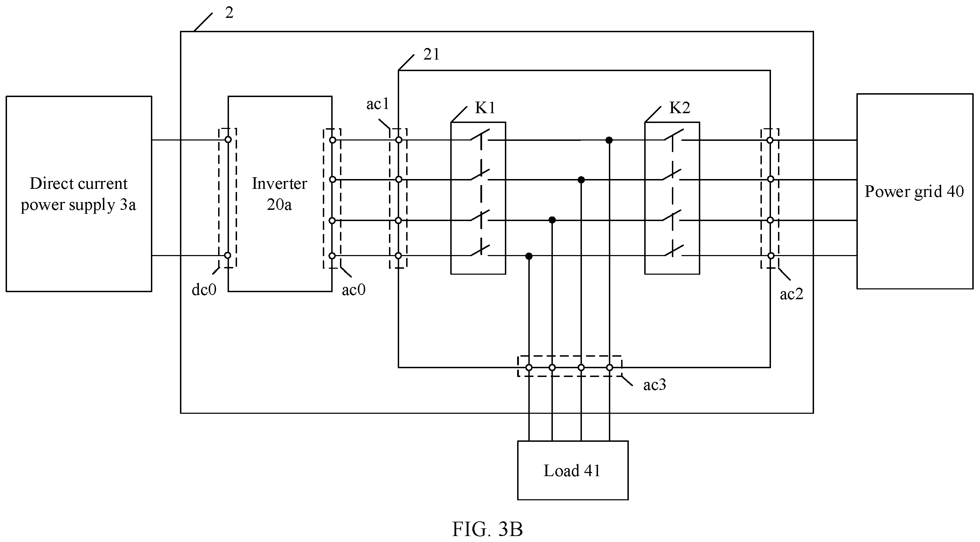

The inverter 20a may be a single-phase inverter or a three-phase inverter. For example, when the inverter 20a is a single-phase inverter, a circuit architecture of the power generation system 2 may be shown in FIG. 3A. The direct current port dc0 is a single-phase direct current port, and the first alternating current port ac0, the second alternating current port ac1, the third alternating current port ac2, and the fourth alternating current port ac3 are all single-phase alternating current ports. Each of the first switch K1 and the second switch K2 is a relay having two contacts, and the two contacts are simultaneously connected or disconnected. Optionally, each of the first switch K1 and the second switch K2 includes two controllable switches or two relays. For example, when the inverter 20a is a three-phase inverter, a circuit architecture of the power generation system 2 may be shown in FIG. 3B. The direct current port dc0 is a single-phase direct current port, and the first alternating current port ac0, the second alternating current port ac1, the third alternating current port ac2, and the fourth alternating current port ac3 are all three-phase alternating current ports. Each of the first switch K1 and the second switch K2 is a relay having four contacts, and the four contacts are simultaneously connected or disconnected. Optionally, each of the first switch K1 and the second switch K2 includes four controllable switches or four relays.

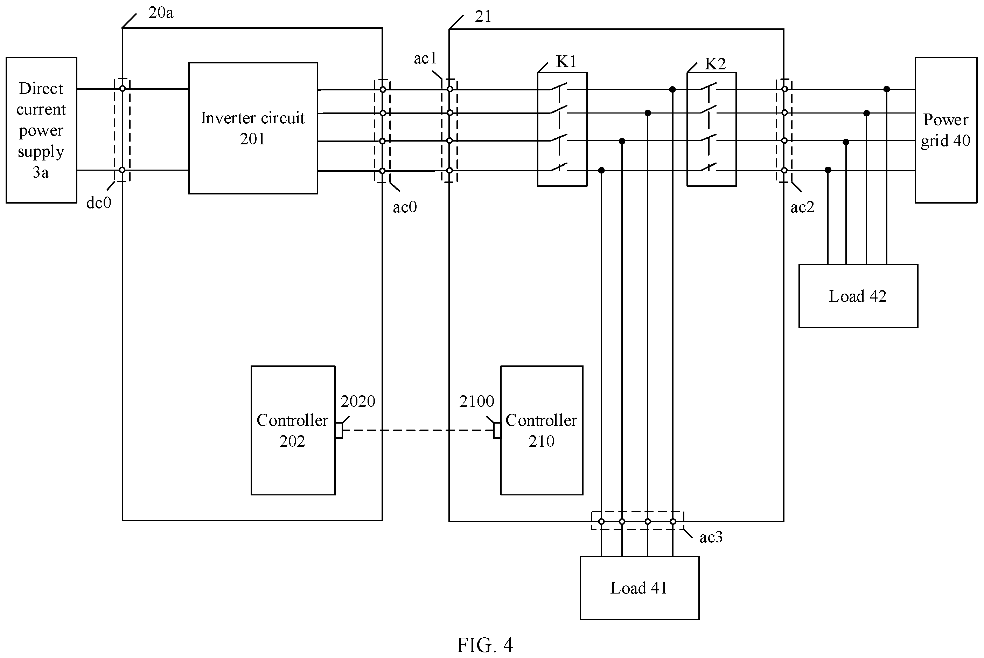

FIG. 4 is a diagram of another circuit architecture of a power generation system according to an embodiment of this application. As shown in FIG. 4, the third alternating current port ac2 of the backup power box 21 shown in FIG. 3B is further configured to connect to a load 42. When both the first switch K1 and the second switch K2 are turned on, the load 42 is configured to: receive an alternating current output by the inverter 20a, or receive an alternating current provided by the power grid 40. The load 41 may also be referred to as a backup load, and the load 42 may also be referred to as a non-backup load. In this case, the third alternating current port ac2 may be a non-backup output port, and the fourth alternating current port ac3 may be a backup output port. For example, when the power generation system 2 is a household power generation system, the backup load is a major load in a user's home, and the non-backup load is another load in the user's home. A power supply priority of the backup load is higher than a power supply priority of the non-backup load in the user's home, to ensure that when the power grid 40 experiences a power outage or islanding occurs, the inverter 20a can still supply power to the major load, so that the major load does not experience a power outage. This improves user experience.

The backup power box 21 further includes a controller 210, and the inverter 20a includes an inverter circuit 201 and a controller 202. The controller 210 may be connected to the controller 202 in a wired or wireless manner, and is configured to deliver a signal, for example, the mode switching signal, to the controller 202. For example, the controller 210 includes a communication interface 2100, and the controller 202 includes a communication interface 2020. The communication interface 2100 is connected to the communication interface 2020, and is used for communication between the controller 210 and the controller 202. The communication interface 2100 and the communication interface 2020 may be a recommended standard (recommended standard, RS) 485 communication interface, an input/output (input/output, I/O) communication interface, a digital output (digital output, DO) communication interface, or an interface of another type.

The controller 202 is configured to deliver a pulse width modulation (pulse width modulation, PWM) signal to a switching transistor in the inverter circuit 201, so that the inverter 20a outputs the alternating current. The controller 210 is configured to: detect the voltage at the third alternating current port ac2, and when the voltage at the third alternating current port ac2 is greater than the first voltage threshold, control both the first switch K1 and the second switch K2 to be turned on, to cause the inverter 20a or the power grid 40 to supply power to the load 41. The voltage at the first alternating current port ac0 is greater than the first voltage threshold when the inverter 20a supplies power to the load 41. In this case, the inverter 20a is in the on-grid operating mode. The voltage at the third alternating current port ac2 may be obtained through detection by a voltage detection circuit inside the controller 210, or may be obtained by a voltage detection device outside the controller 210 by detecting the voltage at the third alternating current port ac2 and then delivering the voltage to the controller 210. This is not limited herein.

After the power grid 40 experiences a power outage or islanding occurs, the controller 202 is configured to detect the voltage at the first alternating current port ac0 to obtain the voltage at the third alternating current port ac2. Further, the controller 202 is further configured to: when the voltage at the third alternating current port ac2 is greater than or equal to the second voltage threshold, control the inverter circuit 201 to operate in the open-loop voltage source mode, to decrease the voltage at the first alternating current port ac0 to be less than or equal to the first voltage threshold. In this case, the voltage at the third alternating current port ac2 also decreases to be less than or equal to the first voltage threshold synchronously. The voltage at the first alternating current port ac0 may be obtained through detection by the voltage detection circuit inside the controller 202, or may be obtained by the voltage detection device outside the controller 202 by detecting the voltage at the first alternating current port ac0 and then delivering the voltage to the controller 202. This is not limited herein. The controller 210 is configured to: detect the voltage at the third alternating current port ac2, and when the voltage at the third alternating current port ac2 is less than or equal to the first voltage threshold, control the second switch K2 to be turned off and keep the first switch K1 on, to disconnect the backup power box 21 from the power grid 40 and cause the inverter 20a to supply power to the load 41. In this case, the inverter 20a switches from the on-grid operating mode to the off-grid operating mode.

After the inverter 20a switches to the off-grid operating mode, the controller 210 is further configured to: after the second switch K2 is turned off and the first switch K1 is kept on, deliver the mode switching signal to the communication interface 2020 by using the communication interface 2100. The controller 202 is further configured to: receive the mode switching signal by using the communication interface 2020, and control the inverter circuit 201 to switch from the open-loop voltage source mode to the closed-loop voltage source mode, to gradually increase the voltage at the first alternating current port ac0 to be greater than the first voltage threshold and less than the second voltage threshold. In this case, the inverter 20a has been switched from the on-grid operating mode to the off-grid operating mode, and in this on-grid/off-grid switching process, output of the inverter 20a is continuous and uninterrupted. In other words, there is no process of stopping sending a PWM driver gating signal for a period of time. According to this embodiment of this application, stopping sending a PWM driver gating signal for a period of time and switching to the off-grid operating mode in a process in which the inverter 20a stops sending the PWM driver gating signal can be avoided. In this way, the inverter 20a truly switches (for example, switches in 0 ms) between the on-grid operating mode and the off-grid operating mode seamlessly, thereby reducing a delay time for the inverter 20a to switch from on-grid to off-grid.

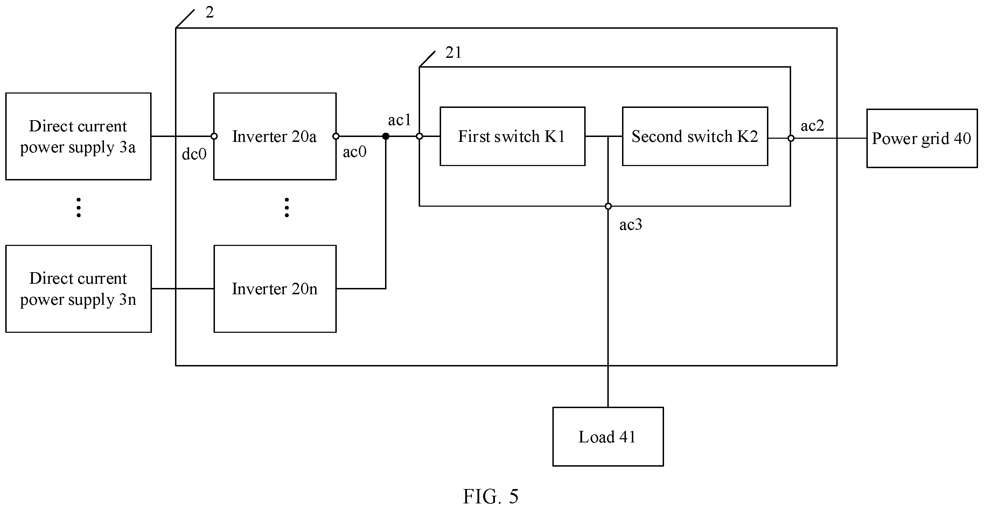

FIG. 5 is a diagram of another circuit architecture of a power generation system according to an embodiment of this application. There may alternatively be a plurality of inverters in the power generation system. The circuit architecture of the power generation system may be shown in FIG. 5. The power generation system 2 includes the inverter 20a to an inverter 20n. The direct current port of the inverter 20a is configured to connect to the direct current power supply 3a, ..., and a direct current port of the inverter 20n is configured to connect to a direct current power supply 3n. First alternating current ports of the inverter 20a to the inverter 20n are all connected in parallel to the second alternating current port ac1 of the backup power box 21. After the power grid 40 experiences a power outage or islanding occurs, the inverter 20a to the inverter 20n are all in the open-loop voltage source mode, so that voltages at the first alternating current ports of the inverter 20a to the inverter 20n are all fixed voltages. In this case, the inverter 20a to the inverter 20n are run in parallel. It should be understood that, when the voltages at the first alternating current ports of the inverter 20a to the inverter 20n are all fixed voltages, a difference between the voltages at the first alternating current ports of any two inverters in the inverter 20a to the inverter 20n is less than or equal to a fluctuation threshold. The fluctuation threshold may be set by a user, or may be determined by an electronic component inside the inverter. According to this embodiment of this application, when output voltages of the inverter 20a to the inverter 20n are all the fixed voltages, a current that flows back to the inverter 20a to the inverter 20n when the power grid 40 experiences a power outage or islanding occurs can be avoided, and a circulating current can be avoided between the inverter 20a to the inverter 20n. This improves use safety and a service life of the inverter 20a to the inverter 20n. It should be understood that, for a specific circuit structure of another inverter in the inverter 20a to the inverter 20n and a specific process of switching between the on-grid operating mode and the off-grid operating mode, refer to the description of the specific circuit structure of the inverter 20a and the switching between the on-grid operating mode and the off-grid operating mode in embodiments corresponding to FIG. 2 to FIG. 4. Details are not described herein again.

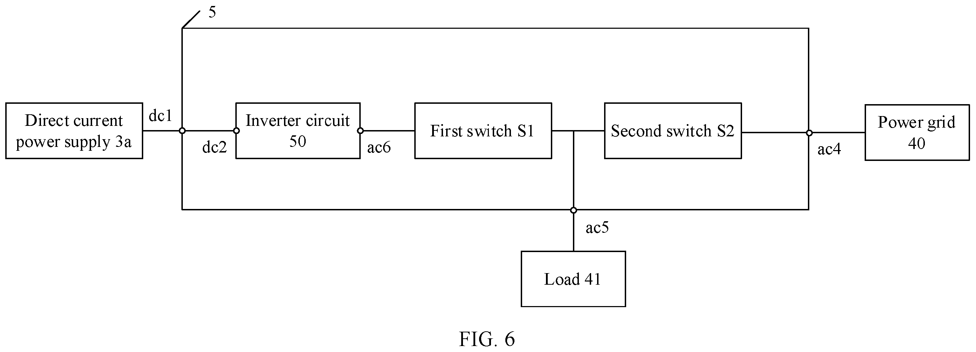

FIG. 6 is a diagram of a circuit architecture of an inverter according to an embodiment of this application. When the inverter is an integrated inverter that has a load breaking capability and supports both on-grid operation and off-grid operation, the circuit architecture of the inverter may be shown in FIG. 6. The inverter 5 is configured to be connected between the direct current power supply 3a and the power grid 40 or the load 41 to perform alternating current-direct current conversion. The inverter 5 includes a direct current port dc1, an inverter circuit 50, a first switch S1, a second switch S2, a first alternating current port ac4, and a second alternating current port ac5. The inverter 5 is configured to: invert a direct current output by the direct current power supply 3a to an alternating current, and supply power to the power grid 40 and the load 41. In this case, the direct current port dc1 is an input port, and both the first alternating current port ac4 and the second alternating current port ac5 are output ports. The inverter 5 is further configured to: convert an alternating current provided by the power grid 40 into a direct current and charge the direct current power supply 3a. For example, the direct current power supply 3a may be an energy storage unit. In this case, the direct current port dc1 is an output port, and the first alternating current port ac4 is an input port.

The direct current port dc1 of the inverter 5 is configured to connect to the direct current power supply 3a, to receive the direct current output by the direct current power supply 3a or output a direct current to the direct current power supply 3a. The first alternating current port ac4 of the inverter 5 is configured to connect to the power grid 40, to output an alternating current to the power grid 40 or receive the alternating current provided by the power grid 40. The second alternating current port ac5 of the inverter is configured to connect to the load 41, to output an alternating current to the load 41. A direct current terminal dc2 of the inverter circuit 50 is connected to the direct current port dc1 of the inverter 5, the first switch S1 and the second switch S2 are connected in series between an alternating current terminal ac6 of the inverter circuit 50 and the first alternating current port ac4 of the inverter 5, and a series connection point between the first switch S1 and the second switch S2 is connected to the second alternating current port ac5 of the inverter 5.

When the inverter 5 switches between the on-grid operating mode and the off-grid operating mode, the inverter 5 is configured to: when a voltage at the first alternating current port ac4 is greater than the first voltage threshold, control both the first switch S1 and the second switch S2 to be turned on, to cause the inverter circuit 50 or the power grid 40 to supply power to the load 41. In this case, the inverter 5 is in the on-grid operating mode. The first voltage threshold is k times the rated voltage of the power grid 40, and k is less than 1. For example, k is 0.7, 0.8, or another value. The voltage at the first alternating current port ac4 is the same as the voltage of the power grid 40.

When the power grid 40 experiences a power outage or islanding occurs, the voltage at the first alternating current port ac4 gradually increases to be greater than or equal to the second voltage threshold, and the second voltage threshold is greater than the first voltage threshold. The second voltage threshold is m times the rated voltage of the power grid 40, and m is greater than 1. For example, m may be 1.15 or another value. In this case, the inverter 5 is further configured to: when the voltage at the first alternating current port ac4 is greater than or equal to the second voltage threshold, control the second switch S2 to be turned off and keep the first switch S1 on, to disconnect the inverter circuit 50 from the power grid 40 and cause the inverter circuit 50 to supply power to the load 41. In this case, the inverter 5 switches from the on-grid operating mode to the off-grid operating mode.

According to this embodiment of this application, an operating mode of the inverter 5 may be switched from the on-grid operating mode to the off-grid operating mode without stopping sending a PWM driver gating signal. In this way, the inverter 5 truly switches between the on-grid operating mode and the off-grid operating mode seamlessly, thereby reducing duration of on-grid/off-grid switching of the inverter 5. In addition, uninterrupted power supply to the load 41 is ensured, thereby improving power supply reliability of the load 41.

The first switch S1 and the second switch S2 may be relays, controllable switches, or switches of another type that have a load breaking capability, and there may be one or more first switches S1 and one or more second switches S2. The power of the load 41 is greater than output power of the inverter 5 (that is, heavy load), or the power of the load 41 is less than or equal to the output power of the inverter 5 (that is, light load). This is not limited herein. It should be understood that, whether the load 41 is light or heavy, the inverter 5 can truly switch between the on-grid operating mode and the off-grid operating mode seamlessly in this embodiment of this application, resulting in greater applicability.

Output power of the direct current power supply 3a is usually greater than the power of the load 41, so that the output power of the direct current power supply 3a can be quickly released to the load 41 through the inverter 5, to ensure that a power supply power requirement of the load 41 is met when the power grid 40 experiences a power outage or islanding occurs.

The first alternating current port ac4 of the inverter 5 is further configured to connect to another load (not shown in the figure). When both the first switch S1 and the second switch S2 are turned on, the another load is configured to: receive an alternating current output by the inverter 5, or receive the alternating current provided by the power grid 40.

After the power grid 40 experiences a power outage or islanding occurs, the inverter 5 is further configured to: detect the voltage at the first alternating current port ac4, and when the voltage at the first alternating current port ac4 is greater than or equal to the second voltage threshold, control the inverter circuit 50 to operate in the open-loop voltage source mode. The voltage at the first alternating current port ac4 may be obtained through detection by the voltage detection circuit inside the inverter 5, or may be obtained by the voltage detection device outside the inverter 5 by detecting the voltage at the first alternating current port ac4 and then delivering the voltage to the inverter 5. The open-loop voltage source mode is an operating mode in which the inverter 20a controls a voltage at the alternating current terminal ac6 of the inverter circuit 50 to be a fixed voltage. For example, the open-loop voltage source mode may be the voltage source droop control mode, a VSG mode, or another voltage source mode. This is not limited herein. Further, the inverter 5 is further configured to: after the inverter circuit 50 operates in the open-loop voltage source mode, control the second switch S2 to be turned off and keep the first switch S1 on, to disconnect the inverter circuit 50 from the power grid 40 and cause the inverter circuit 50 to supply power to the load 41. In this case, the inverter 5 switches from the on-grid operating mode to the off-grid operating mode. According to this embodiment of this application, after the power grid 40 experiences a power outage or islanding occurs, the inverter circuit 50 is controlled to operate in the open-loop voltage source mode, so that a risk such as an overcurrent or loss of control caused by current backflow to the inverter 5 after the power grid 40 experiences a power outage or islanding occurs can be avoided, to avoid a hardware fault risk caused by the overcurrent or loss of control of the inverter 5. This improves use safety and a service life of the inverter 5. In addition, the inverter circuit 50 is controlled to operate in the open-loop voltage source mode to ensure continuous and uninterrupted output of the inverter 5. In this way, the inverter 5 truly switches between the on-grid operating mode and the off-grid operating mode seamlessly, so that the load 41 is more reliably protected from being damaged, thereby improving product competitiveness of the inverter 5.

It may be understood that, after the inverter circuit 50 operates in the open-loop voltage source mode, the voltage at the alternating current terminal ac6 of the inverter circuit 50 may be adjusted or not adjusted. This may be specifically determined by a value of the fixed voltage, and is not limited herein. In specific implementation, because the voltage at the first alternating current port ac4 is consistent with the voltage at the alternating current terminal ac6 of the inverter circuit 50, when the fixed voltage is also greater than or equal to the second voltage threshold, even if the inverter circuit 50 operates in the open-loop voltage source mode, the voltage at the alternating current terminal ac6 of the inverter circuit 50 may not be adjusted, so that the voltage is kept greater than or equal to the second voltage threshold. Optionally, when the fixed voltage is less than the second voltage threshold, the inverter circuit 50 operates in the open-loop voltage source mode, and adjusts the voltage at the alternating current terminal ac6 of the inverter circuit 50 to reduce the voltage to be less than the second voltage threshold.

After the inverter 5 switches to the off-grid operating mode, the inverter 5 is further configured to: after the second switch S2 is turned off and the first switch S1 is kept on, control the inverter circuit 50 to switch from the open-loop voltage source mode to the closed-loop voltage source mode. The closed-loop voltage source mode is an operating mode in which the inverter 20a adjusts the voltage at the alternating current terminal ac6 of the inverter circuit 50 in real time based on the voltage of the load 41. For example, the closed-loop voltage source mode may be the voltage source droop control mode, the VSG mode, or another voltage source mode. This is not limited herein. After the inverter circuit 50 switches to the closed-loop voltage source mode, the voltage at the alternating current terminal ac6 of the inverter circuit 50 gradually decreases to be less than the second voltage threshold and greater than the first voltage threshold. In this case, because the voltage at the alternating current terminal ac6 of the inverter circuit 50 is consistent with a voltage at the second alternating current port ac5, the voltage at the second alternating current port ac5 also gradually decreases to be less than the second voltage threshold and greater than the first voltage threshold, and power is supplied to the load 41. According to this embodiment of this application, after the inverter 5 switches to the off-grid operating mode, the inverter 5 may flexibly adjust the voltage at the alternating current terminal ac6 of the inverter circuit 50 based on the power of the load 41, and supply power to the load 41, to ensure good running of the load 41. This improves power supply efficiency of the inverter 5.

An example in which the closed-loop voltage source mode is the voltage source droop control mode is used for description. The inverter 5 is configured to: detect the voltage at the second alternating current port ac5 (namely, the voltage of the load 41) in real time, and adjust the voltage at the alternating current terminal ac6 of the inverter circuit 50 based on the difference between the voltage of the load 41 and the reference voltage by using the PI controller, so that the voltage at the alternating current terminal ac6 of the inverter circuit 50 is kept consistent with the reference voltage. In this way, the voltage at the alternating current terminal ac6 of the inverter circuit 50 gradually decreases to be less than the second voltage threshold and greater than the first voltage threshold. For example, the reference voltage may be the rated voltage of the power grid 40.

It should be understood that all operations performed by the inverter 5 during switching between the on-grid operating mode and the off-grid operating mode may alternatively be performed by a controller disposed inside or outside the inverter 5. Details are not described herein again.

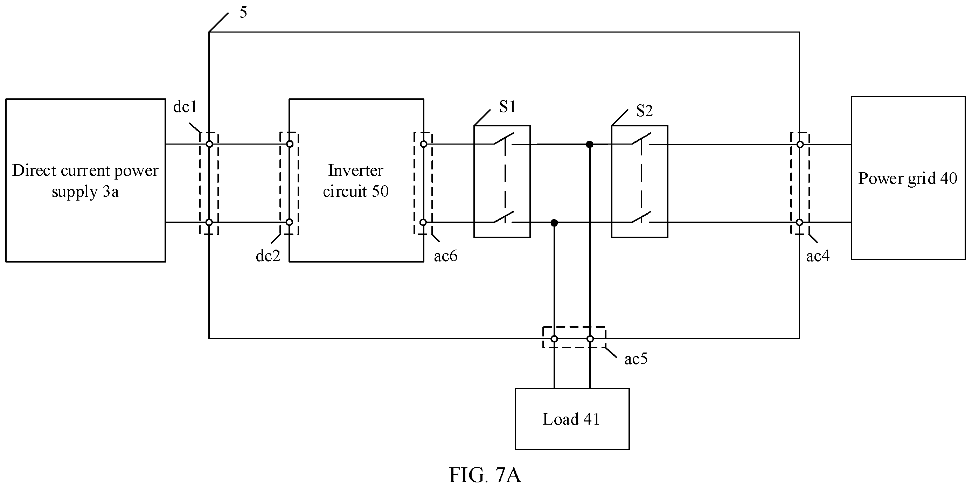

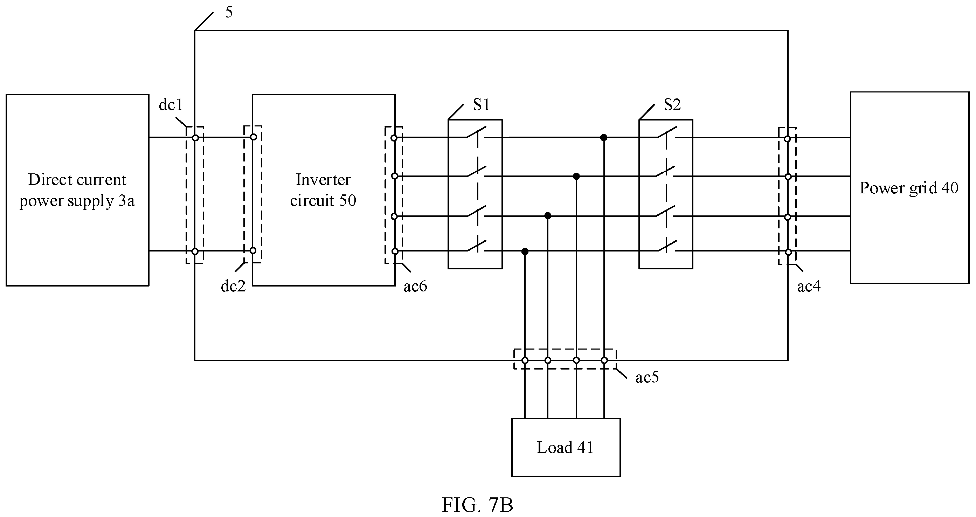

In some feasible implementations, the inverter 5 may be a single-phase inverter or a three-phase inverter. For example, when the inverter 5 is a single-phase inverter, a circuit architecture of the inverter 5 may be shown in FIG. 7A. The direct current port dc1 is a single-phase direct current port, and both the first alternating current port ac4 and the second alternating current port ac5 are single-phase alternating current ports. Each of the first switch S1 and the second switch S2 is a relay having two contacts, and the two contacts are simultaneously connected or disconnected. Optionally, each of the first switch S1 and the second switch S2 includes two controllable switches or two relays. When the inverter 5 is a three-phase inverter, a circuit architecture of the inverter 5 may be shown in FIG. 7B. The direct current port dc1 is a single-phase direct current port, and both the first alternating current port ac4 and the second alternating current port ac5 are three-phase alternating current ports. Each of the first switch S1 and the second switch S2 is a relay having four contacts, and the four contacts are simultaneously connected or disconnected. Optionally, each of the first switch K1 and the second switch K2 includes four controllable switches or four relays.

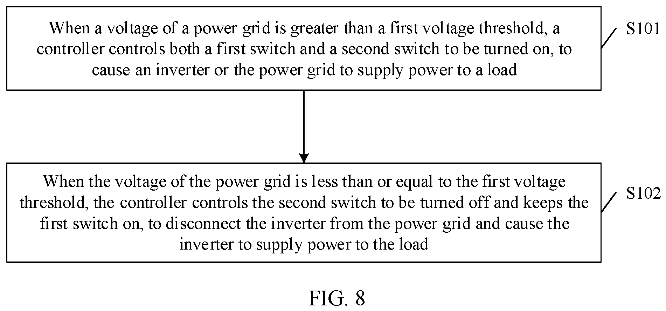

FIG. 8 is a schematic flowchart of an on-grid/off-grid switching method for a power generation system according to an embodiment of this application. The on-grid/off-grid switching method may be performed by a controller in the power generation system. As shown in FIG. 8, the on-grid/off-grid switching method includes the following step S101 and step S102.

Step S101: When a voltage of a power grid is greater than a first voltage threshold, the controller controls both a first switch and a second switch to be turned on, to cause an inverter or the power grid to supply power to a load.

In step S101, the first voltage threshold is k times a rated voltage of the power grid, and k is less than 1. For example, k may be 0.7, 0.8, or another value. The power generation system includes the inverter, the first switch, and the second switch, and the inverter includes a direct current port and a first alternating current port. The direct current port of the inverter is configured to connect to a direct current power supply, the first switch and the second switch are configured to connect in series between the first alternating current port of the inverter and the power grid, and a series connection point between the first switch and the second switch is configured to connect to the load.

It should be understood that, when the first switch and the second switch are disposed in a backup power box outside the inverter, the controller may be the controller 210 in the backup power box 21. When the first switch and the second switch are disposed inside the inverter, the controller may be a controller disposed outside the inverter.

After the power grid experiences a power outage or islanding occurs, a voltage of the power grid gradually increases to be greater than or equal to a second voltage threshold, and the second voltage threshold is greater than the first voltage threshold. In this case, the controller may detect a voltage at the first alternating current port by using the inverter, to obtain the voltage of the power grid. Further, when the voltage of the power grid is greater than or equal to the second voltage threshold, the controller may operate in an open-loop voltage source mode by using the inverter, to decrease the voltage of the power grid to be less than or equal to the first voltage threshold. It should be understood that, after the power grid experiences a power outage or islanding occurs, the inverter does not stop sending a PWM driver gating signal, but controls the voltage at the first alternating current port to gradually decrease to be less than or equal to the first voltage threshold, and in a process in which the voltage at the first alternating current port gradually decreases, output of the inverter is continuous and uninterrupted. In this case, because the voltage at the first alternating current port is consistent with the voltage of the power grid, the voltage of the power grid also gradually decreases to be less than or equal to the first voltage threshold, so that the controller identifies that the power grid experiences a power outage or islanding occurs, and switches the inverter from an on-grid operating mode to an off-grid operating mode. According to this embodiment of this application, continuous and uninterrupted output of the inverter can be ensured after the power grid experiences a power outage or islanding occurs, and the inverter is switched from the on-grid operating mode to the off-grid operating mode when the output of the inverter is continuous and uninterrupted. In this way, the inverter truly switches between the on-grid operating mode and the off-grid operating mode seamlessly, so that the load is more reliably protected from being damaged, thereby improving product competitiveness of the inverter. In addition, the inverter operates in the open-loop voltage source mode, so that a risk such as an overcurrent or loss of control caused by current backflow to the inverter after the power grid experiences a power outage or islanding occurs can be avoided, to avoid a hardware fault risk caused by the overcurrent or loss of control of the inverter. This improves use safety and a service life of the inverter.

Step S102: When the voltage of the power grid is less than or equal to the first voltage threshold, the controller controls the second switch to be turned off and keeps the first switch on, to disconnect the inverter from the power grid and cause the inverter to supply power to the load.

After the inverter switches to the off-grid operating mode, the controller delivers, after the second switch is turned off and the first switch is kept on, a mode switching signal to the inverter. The mode switching signal may usually be a low-level signal. The controller may receive the mode switching signal by using the inverter, and switch from the open-loop voltage source mode to a closed-loop voltage source mode by using the inverter. After the inverter switches to the closed-loop voltage source mode, the voltage at the first alternating current port gradually increases to be greater than the first voltage threshold and less than the second voltage threshold, and power is supplied to the load through the first switch. According to this embodiment of this application, after the inverter switches to the off-grid operating mode, the inverter may flexibly adjust the voltage at the first alternating current port based on power of the load, and supply power to the load, to ensure good running of the load. This improves power supply efficiency of the inverter. In specific implementation, for more operations performed by the controller in the on-grid/off-grid switching method for the power generation system provided in this application and corresponding beneficial effect of the operations, refer to the implementations performed by the controllers (for example, the controller 210 and the controller 202) in the power generation system 2 shown in FIG. 2 to FIG. 5 and the operating principles of the power generation system 2 and corresponding beneficial effect of the implementations. Details are not described herein again.

In the on-grid/off-grid switching method provided in this application, the inverter may be switched from the on-grid operating mode to the off-grid operating mode without stopping sending a PWM driver gating signal. In this way, the inverter truly switches between the on-grid operating mode and the off-grid operating mode seamlessly, thereby reducing duration of on-grid/off-grid switching of the inverter. In addition, uninterrupted power supply to the load is ensured, thereby improving power supply reliability of the load.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power generation system, wherein the power generation system comprises an inverter and a backup power box;
the inverter comprises a direct current port and a first alternating current port, the direct current port of the inverter is configured to connect to a direct current power supply, and the inverter is configured to perform alternating current-direct current conversion between the direct current power supply and the backup power box;
the backup power box comprises a second alternating current port, a first switch, a second switch, a third alternating current port, and a fourth alternating current port, the first switch and the second switch are connected in series between the second alternating current port and the third alternating current port of the backup power box, a series connection point between the first switch and the second switch is connected to the fourth alternating current port of the backup power box, the second alternating current port of the backup power box is connected to the first alternating current port of the inverter, the third alternating current port of the backup power box is configured to connect to a power grid, and the fourth alternating current port of the backup power box is configured to connect to a load; and
the backup power box is configured to: when a voltage at the third alternating current port is greater than a first voltage threshold, control both the first switch and the second switch to be turned on, to cause the inverter or the power grid to supply power to the load; and
when the voltage at the third alternating current port is less than or equal to the first voltage threshold, control the second switch to be turned off and keep the first switch on, to disconnect the backup power box from the power grid and cause the inverter to supply power to the load.

2. The power generation system according to claim 1, wherein the inverter is further configured to: when the voltage at the third alternating current port is greater than or equal to a second voltage threshold, operate in an open-loop voltage source mode, to decrease the voltage at the third alternating current port to be less than or equal to the first voltage threshold, wherein the second voltage threshold is greater than the first voltage threshold.

3. The power generation system according to claim 2, wherein the inverter is configured to detect a voltage at the first alternating current port to obtain the voltage at the third alternating current port.

4. The power generation system according to claim 2, wherein the backup power box is further configured to: after the second switch is turned off and the first switch is kept on, deliver a mode switching signal to the inverter; and
the inverter is further configured to: receive the mode switching signal, and switch from the open-loop voltage source mode to a closed-loop voltage source mode, to increase the voltage at the first alternating current port to be greater than the first voltage threshold and less than the second voltage threshold.

5. The power generation system according to any one of claims 2 to 4, wherein the first voltage threshold is k times a rated voltage of the power grid, and k is less than 1.

6. The power generation system according to any one of claims 2 to 5, wherein the second voltage threshold is m times the rated voltage of the power grid, and m is greater than 1.

7. An inverter, configured to be connected between a direct current power supply and a power grid or between the direct current power supply and a load to perform alternating current-direct current conversion, wherein
the inverter comprises a direct current port, an inverter circuit, a first switch, a second switch, a first alternating current port, and a second alternating current port, the direct current port of the inverter is configured to connect to the direct current power supply, the first alternating current port of the inverter is configured to connect to the power grid, and the second alternating current port of the inverter is configured to connect to the load;
a direct current terminal of the inverter circuit is connected to the direct current port of the inverter, the first switch and the second switch are connected in series between an alternating current terminal of the inverter circuit and the first alternating current port of the inverter, and a series connection point between the first switch and the second switch is connected to the second alternating current port of the inverter; and
the inverter is configured to:
when a voltage at the first alternating current port is greater than a first voltage threshold, control both the first switch and the second switch to be turned on, to cause the inverter circuit or the power grid to supply power to the load; and
when the voltage at the first alternating current port is greater than or equal to a second voltage threshold, control the second switch to be turned off and keep the first switch on, to disconnect the inverter circuit from the power grid and cause the inverter circuit to supply power to the load, wherein the second voltage threshold is greater than the first voltage threshold.

8. The inverter according to claim 7, wherein the inverter is further configured to:
when the voltage at the first alternating current port is greater than or equal to the second voltage threshold, control the inverter circuit to operate in an open-loop voltage source mode; and
after the inverter circuit operates in the open-loop voltage source mode, control the second switch to be turned off and keep the first switch on, to disconnect the inverter circuit from the power grid and cause the inverter circuit to supply power to the load.

9. The inverter according to claim 8, wherein the inverter is further configured to:
after the second switch is turned off and the first switch is kept on, control the inverter circuit to switch from the open-loop voltage source mode to a closed-loop voltage source mode, to decrease a voltage at the alternating current terminal of the inverter circuit to be less than the second voltage threshold and greater than the first voltage threshold.

10. The inverter according to any one of claims 7 to 9, wherein the first voltage threshold is k times a rated voltage of the power grid, and k is less than 1.

11. The inverter according to any one of claims 7 to 10, wherein the second voltage threshold is m times the rated voltage of the power grid, and m is greater than 1.

12. An on-grid/off-grid switching method for a power generation system, wherein the method comprises:
when a voltage of a power grid is greater than a first voltage threshold, controlling both a first switch and a second switch to be turned on, to cause an inverter or the power grid to supply power to a load, wherein the power generation system comprises the inverter, the first switch, and the second switch, the inverter comprises a direct current port and a first alternating current port, the direct current port of the inverter is configured to connect to a direct current power supply, the first switch and the second switch are configured to connect in series between the first alternating current port of the inverter and the power grid, and a series connection point between the first switch and the second switch is configured to connect to the load; and
when the voltage of the power grid is less than or equal to the first voltage threshold, controlling the second switch to be turned off and keeping the first switch on, to disconnect the inverter from the power grid and cause the inverter to supply power to the load.

13. The on-grid/off-grid switching method according to claim 12, wherein the method further comprises:
when the voltage of the power grid is greater than or equal to a second voltage threshold, operating, by the inverter, in an open-loop voltage source mode, to decrease the voltage of the power grid to be less than or equal to the first voltage threshold, wherein the second voltage threshold is greater than the first voltage threshold.

14. The on-grid/off-grid switching method according to claim 13, wherein the method further comprises:
detecting, by the inverter, a voltage at the first alternating current port, to obtain the voltage of the power grid.

15. The on-grid/off-grid switching method according to claim 13, wherein the method further comprises:
after the second switch is turned off and the first switch is kept on, delivering a mode switching signal to the inverter; and
receiving, by the inverter, the mode switching signal, and switching, by the inverter, from the open-loop voltage source mode to a closed-loop voltage source mode, to increase the voltage at the first alternating current port to be greater than the first voltage threshold and less than the second voltage threshold.
